# EUROPEAN PATENT SPECIFICATION

(11) **EP 3 382 707 B1**
(45) Date of publication and mention of the grant of the patent: **28.10.2020**
(21) Application number: 16867754.0
(22) Date of filing: 11.08.2016
(51) Int. Cl.: G10H 1/36, G11B 27/022

(54) **AUDIO FILE RE-RECORDING METHOD, DEVICE AND STORAGE MEDIUM**
AUDIODATEIWIEDERAUFNAHMEVERFAHREN, -VORRICHTUNG UND SPEICHERMEDIUM
PROCÉDÉ, DISPOSITIF ET SUPPORT DE STOCKAGE DE RÉENREGISTREMENT DE FICHIERS AUDIO

(30) Priority: 23.11.2015 CN 201510810824
(43) Date of publication of application: 03.10.2018
(73) Proprietor: Guangzhou Kugou Computer Technology Co., Ltd., Guangdong Prov., 510660 (CN)
(72) Inventor: FENG, Suiyu, Shenzhen Guangdong 518000 (CN)
(74) Representative: Cabinet Beau de Loménie
(86) International application number: PCT/CN2016/094649
(87) International publication number: WO 2017/088527

(56) References cited:
- EP-A1- 2 930 714
- CN-A- 101 840 722
- CN-A- 104 347 096
- JP-A- H04 325 988
- JP-A- 2000 172 279
- US-A- 6 111 709
- US-A1- 2008 255 687
- APPLE: "Logic Pro X - User Guide for OS X", LOGIC PRO X - USER GUIDE FOR OS X, APPLE.INC, PAGE(S) 1 - 919 , 1 January 2013 (2013-01-01), XP001526585, Retrieved from the Internet: URL:https://manuals.info.apple.com/MANUALS /1000/MA1648/en_US/logic_pro_x_user_guide. pdf [retrieved on 2016-01-12]
- Anonymous: "RC-300 Loop Station Owner's Manual", , 1 January 2011 (2011-01-01), XP055446909, Retrieved from the Internet: URL:https://static.roland.com/assets/media /pdf/RC-300_e03_W.pdf [retrieved on 2018-02-01]
- Anonymous: "Anvil Studio USER'S GUIDE", , 1 June 2011 (2011-06-01), pages 1-2, XP055541467,

## Description

### FIELD OF THE INVENTION

The present disclosure relates to the field of terminal technology, and in particular, to an audio file re-recording method and device, and a storage medium.

### BACKGROUND OF THE INVENTION

In modern life, more and more recording applications are installed in mobile terminals to enrich user's life in spare-time, and based on these recording applications, the users can record audio files without entering into professional recording studios. During the recording process, due to their own conditions such as breath, timbre, etc., it is possible that a certain voice clip in the recorded audio file cannot reach the desired effect of the users. Thus, it is required to re-record the voice clip in the audio file, so as to improve the listening effect of the recorded audio file.

At present, the recording applications in the mobile terminal are provided with a re-recording function. When receiving a re-recording instruction, the mobile terminal plays an accompaniment file through a loudspeaker and simultaneously collects the user's vocal through a microphone, so as to obtain an audio file. After multiple audio files are obtained through multiple separate re-recording operations, the mobile terminal may edit and splice the multiple audio files, and finally obtain a re-recorded audio file.

Usually, a part that requires to be re-recorded in an audio file may be only one sentence or one paragraph. Repeated re-recording of the entire audio file increases resource consumption of the mobile terminal, and moreover, since each time when re-recording, the user's breath, distance from the microphone, timbre and other controls are not the same, resulting in different data collected by the mobile terminal each time, so that the listening effect of the final re-recorded audio file obtained through editing and splicing is still poor, and sometimes, the spliced traces may be obvious.

"Logic Pro X - User Guide for OS X" LOGIC PRO X - USER GUIDE FOR OS X, APPLE.INC pages 201-210, provides details of take recording and editing, punch in/out techniques including on the fly punching in and automatic punch in are also described.

US 6,111,709 A discloses buffered punch in/out recording for musical recorder and provides automatic punch-out timing detection.

US 2008/255687 A1 discloses editing audio recording takes in an audio workstation; and provides details on how the takes may be patched up together. Cross-fade for patches is indicated.

EP 2 930 714 A1 provides a system for re-recording different takes of a lyric and combining spectral components of different takes together.

### SUMMARY OF THE INVENTION

To solve the problems of the prior art, there are provided in embodiments of the present disclosure an audio file re-recording method and device.

In one aspect, there is provided an audio file re-recording method according to appended claim 1, including:
determining a first time, the first time being a start time of a vocal clip to be re-recorded in an audio file;
playing a first recorded clip that has been recorded, the first recorded clip taking the first time as an end time;
collecting, upon reaching the first time, first vocal data of a user to obtain a second recorded clip; and
processing the first recorded clip and the second recorded clip to obtain a re-recorded audio file.

In another aspect, there is provided a non-volatile storage medium according to appended claim 7, and an audio file re-recording device according to appended claim 4, including:
an acquiring module, configured to determine a first time, the first time being a start time of a vocal clip to be re-recorded in an audio file;
a first playing module, configured to play a first recorded clip that has been recorded, the first recorded clip taking the first time as an end time;
a first collecting module, configured to collect, upon reaching the first time, first vocal data of a user to obtain a second recorded clip; and
a processing module, configured to process the first recorded clip and the second recorded clip to obtain a re-recorded audio file.

In another aspect, there is provided a non-volatile storage medium storing program instructions thereon, where when the program instructions are executed by a computing apparatus, the computing apparatus is configured to execute the following operations:
determining a first time, the first time being a start time of a vocal clip to be re-recorded;
playing a first recorded clip that has been recorded, the first recorded clip taking the first time as an end time;
collecting, upon reaching the first time, first vocal data of a user to obtain a second recorded clip; and
processing the first recorded clip and the second recorded clip to obtain a re-recorded audio file.

According to the present disclosure, there is no need to repeatedly record a sound waveform file, when re-recording a vocal clip to be re-recorded, the user can listen to the previously recorded clips by playing the clips prior to the vocal clip to be re-recorded, thereby adjusting the user's breath, distance from the microphone, timber and so on. Based on the collected singing data, the audio file obtained through editing and splicing by the mobile terminal is better in listening effect, and the spliced trace thereof is imperceptible to the listener.

### BRIEF DESCRIPTION OF THE DRAWINGS

FIG. 1 is a flowchart of an audio file re-recording method provided by an embodiment of the present disclosure;
FIG. 2 is a flowchart of an audio file re-recording method provided by another embodiment of the present disclosure;
FIG. 3 is a schematic diagram of an audio file recording interface provided by another embodiment of the present disclosure;
FIG. 4 is a schematic diagram of a sound waveform provided by another embodiment of the present disclosure;
FIG. 5 is a schematic diagram of a sound waveform provided by another embodiment of the present disclosure;
FIG. 6 is a schematic diagram of a sound waveform provided by another embodiment of the present disclosure;
FIG. 7 is a schematic diagram of a sound waveform provided by another embodiment of the present disclosure;
FIG. 8 is a schematic diagram of fitting a first target sound waveform and a second target sound waveform provided by another embodiment of the present disclosure;
FIG. 9 is a schematic diagram of a structure of an audio file re-recording device provided by another embodiment of the present disclosure; and
FIG. 10 is a schematic diagram of a structure of an audio file re-recording terminal provided by another embodiment of the present disclosure.

### DETAILED DESCRIPTION OF THE EMBODIMENTS

To describe the purpose, the technical solutions and the advantages of the present disclosure more clearly, implementations of the present disclosure are further described in details below with reference to the accompanying drawings.

With the development of terminal technologies, various applications for recording songs are installed in mobile terminals to satisfy singing needs of users. For some non-professional singers, it is difficult to control their breaths and emotions during the recording of an audio file, resulting in that the desired effect of users is unattainable for some vocal clips. At this time, the users often re-record these vocal clips. Since the re-recording of an audio file is preformed repeatedly and separately, and the repeatedly re-recorded audio file is edited and spliced, resource consumption of the mobile terminal is increased, and when the spliced audio file is played, the listener can clearly feel that it is not completed by the singer at one fling.

With this regard, there is provided in embodiments of the present disclosure an audio file re-recording method. In the method, when a certain recorded clip is re-recorded, the method enables a user to recall a previous singing scenario by playing a recorded clip prior to the vocal clip to be re-recorded. By means of adjusting the timbre, intensity, distance from the microphone and breath of the current singing, the re-recording recorded clip naturally connects to the previously recorded clips as much as possible. The recorded clip can be a voice clip.

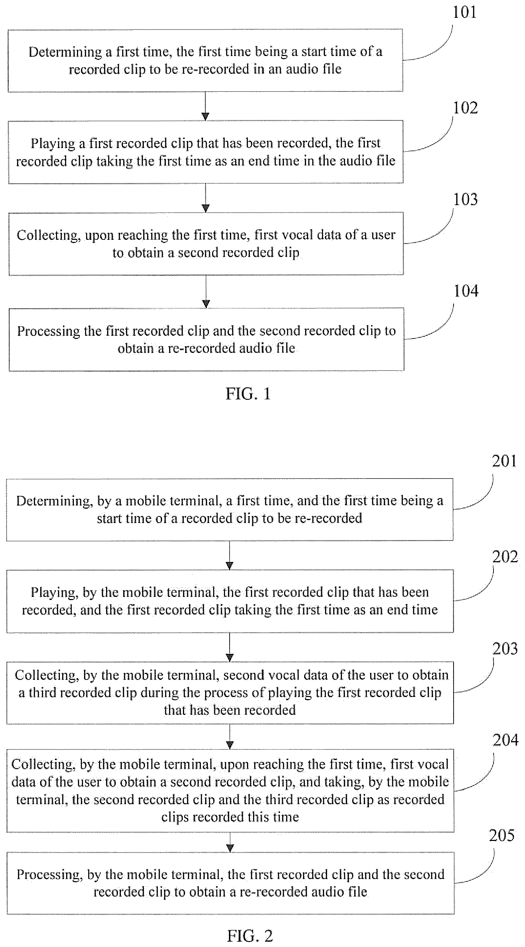

Referring to FIG. 1, the method provided by this embodiment includes:
determining a first time, the first time being a start time of a recorded clip to be re-recorded in an audio file in step 101;
playing a first recorded clip that has been recorded, the first recorded clip taking the first time as an end time in the audio file in step 102;
collecting, upon reaching the first time, first vocal data of a user to obtain a second recorded clip in step 103; and
processing the first recorded clip and the second recorded clip to obtain a re-recorded audio file in step 104.

It can be understood that the first time is not limited to an absolute time point, but may be a time relative to the start time of the audio file for indicating the playing time or the recording progress of the audio file. It can also be understood that the first time may also be represented by the position of the recorded clip to be re-recorded in the audio file.

It can be understood that the recorded clip to be re-recorded herein refers to a recorded clip which is failed to satisfy the user expectations, and is expected to be re-recorded according to a re-recording function provided by the recording application.

It can be understood that the term "recorded clip" used herein refers to a recorded clip in the audio file containing vocal, this clip may contain vocal and may not contain vocal (e.g., silence), and the "recorded clip" appearing throughout the disclosure do not limit that vocals must be included in the clips.

In the method provided by embodiments of the present disclosure, when re-recording a recorded clip to be re-recorded, the user can listen to the previously recorded clips by playing clips prior to the recorded clip to be re-recorded, so as to adjust the user's breath, distance from the microphone, timber and so on. Based on the collected singing data, the audio file obtained through editing and splicing by the mobile terminal is better in listening effect, and the spliced trace thereof is imperceptible to the listener.

In the embodiment of the present disclosure, the method further includes:
collecting second vocal data of the user, during a process of playing the first recorded clip that has been recorded, to obtain a third recorded clip; and
taking the second recorded clip and the third recorded clip as recorded clips recorded this time.

In the embodiment of the present disclosure, the processing of the first recorded clip and of the second recorded clip to obtain the re-recorded audio file includes:
acquiring a first sound waveform corresponding to the first recorded clip, and acquiring a second sound waveform corresponding to the second recorded clip;
determining, from the first sound waveform, a stable start point and a second time corresponding to the stable start point; and
acquiring, from the second sound waveform, a rising start point and a third time corresponding to the rising start point.

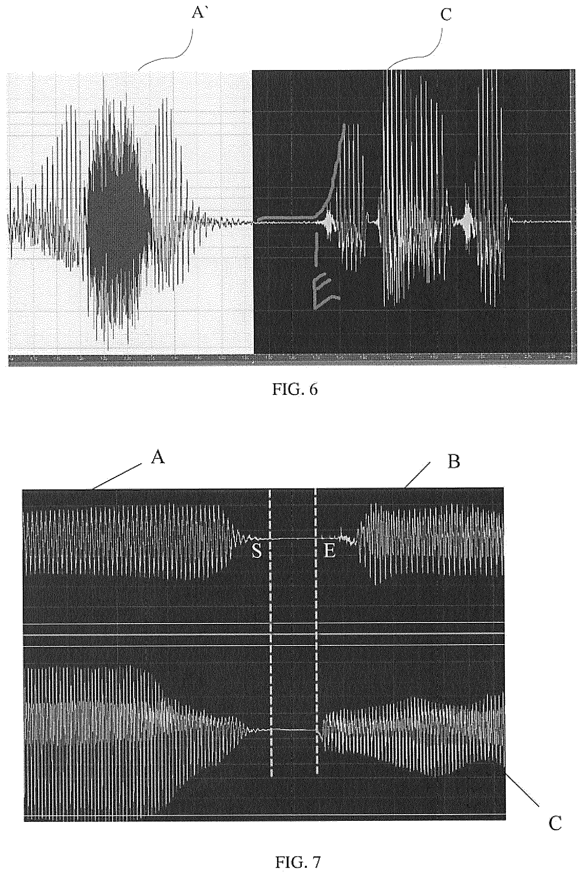

In the embodiment of the present disclosure, the stable start point and the rising start point are a start point and an end point of a stable region between two continuous sound waveforms. The stable region, which region may be determined according to sound waveforms corresponding to lyrics and the loudness of sound, is generally located between sound waveforms corresponding to two continuous sentences in the lyrics, and the loudness thereof is less than a preset threshold. The preset threshold of the loudness of sound may be -70 db. Taking FIG. 7 as an example, sound waveform regions S to E, which are the stable regions with loudness of less than -70 db, are located between two continuous sound waveforms A and B, where S is the stable start point of first sound waveform A, and E is the rising start point of second sound waveform B.

In the embodiment of the present disclosure, the processing of the first recorded clip and the second recorded clip to obtain the re-recorded audio file further includes: taking the second time as a start time to select a fourth recorded clip from recorded clips recorded currently;

The fourth recorded clip can be selected according to the sound waveform corresponding to lyrics and the loudness of sound, e.g., from an end point of the sound waveform corresponding to one sentence of the lyrics to a start point of a region where the loudness of sound is less than a preset threshold. The preset threshold of the loudness of sound may be -70 db.

In the embodiment of the present disclosure, the processing of the first recorded clip and the second recorded clip to obtain the re-recorded audio file further includes: taking the third time as an end time to select a fifth recorded clip from recorded clips recorded last time, the recorded clips recorded last time including the recorded clip to be re-recorded and the first recorded clip.

The selection manner of the fifth recorded clip is similar to that of the fourth recorded clip.

In the embodiment of the present disclosure, the processing of the first recorded clip and of the second recorded clip to obtain the re-recorded audio file further includes: processing the fourth recorded clip and the fifth recorded clip to obtain a re-recorded audio file.

Herein the second time is earlier than the first time, and the first time is earlier than the third time.

In another embodiment of the present disclosure, the processing of the fourth recorded clip and of the fifth recorded clip to obtain the re-recorded audio file includes:
comparing a sound waveform corresponding to the fourth recorded clip with a sound waveform corresponding to the fifth recorded clip;
acquiring a first target sound waveform from the sound waveform corresponding to the fourth recorded clip, and acquiring a second target sound waveform from the sound waveform corresponding to the fifth recorded clip, the first target sound waveform and the second target sound waveform having a same start time and end time; and
fitting the first target sound waveform and the second target sound waveform, so that the fourth recorded clip and the fifth recorded clip are spliced together to obtain the re-recorded audio file.

In another embodiment of the present disclosure, the method further includes:
playing a corresponding accompaniment file during processes of playing recorded clips that have been recorded and recording the recorded clips.

All the foregoing alternative technical solutions can be randomly combined to form alternative embodiments of the present disclosure. The details are not repeated here.

Embodiments of the present disclosure provide an audio file re-recording method. Referring to FIG. 2, the method provided by the embodiments of the present disclosure includes:
determining, by a mobile terminal, a first time, and the first time being a start time of a recorded clip to be re-recorded in step 201.

In the present embodiment, the mobile terminal may be an apparatus such as a smartphone, a laptop, and a tablet. The recording application having a re-recording function is installed in the mobile terminal. Based on the installed recording application, users can record an audio file they like anytime anywhere, and share the recorded audio file with friends.

During the process of recording an audio file, if the recorded clip that has been recorded fails to achieve an expected effect of the user or the score during the recording process is low, the user can re-record the recorded clip based on the re-recording function provided by the recording application. A recorded clip to be re-recorded may be one sentence of lyrics, one paragraph of lyrics and so on, and the recorded clip to be re-recorded corresponds to a start time and an end time in the audio file. The present embodiment takes the start time of the recorded clip to be re-recorded, for example, to be the first time, where the first time is not an absolute time, but is a time relative to the start time for playing the audio file, and can be used for representing the playing time or the recording progress of the audio file. The first time may be less than the playing duration of the audio file, for example, the playing duration of the audio file is 4 minutes, the start time for playing is 00:00, and the first time is the one minute and thirty seconds, the second minute, and so on of the audio file. During the acquisition of the playing duration and the first time of the audio file, the position of the recorded clip to be re-recorded in the audio file can also be acquired, for example, if the playing duration of the audio file is 4 minutes, and the first time is the second minute of the audio file, it can be acquired that the recorded clip to be re-recorded is located at a midpoint of the audio file.

It should be noted that multiple recorded clips are involved in the present disclosure. To distinguish these different recorded clips, in the present embodiment, a recorded clip that fails to achieve the expected effect of the user and needs to be re-recorded is referred to as a recorded clip to be re-recorded, a recorded clip that is played this time is referred to as a first recorded clip, a recorded clip that is recorded during the process of playing the first recorded clip is referred to as a third recorded clip, a recorded clip that is re-recorded this time is referred to as a second recorded clip, a recorded clip that is selected from the recorded clips that are recorded this time is referred to as a fourth recorded clip, and a recorded clip that is selected from the recorded clips that are recorded last time is referred to as a fifth recorded clip.

The method provided by the embodiments of the present disclosure, as shown in FIG. 2, further includes: playing, by the mobile terminal, the first recorded clip that has been recorded, and the first recorded clip taking the first time as an end time in step 202.

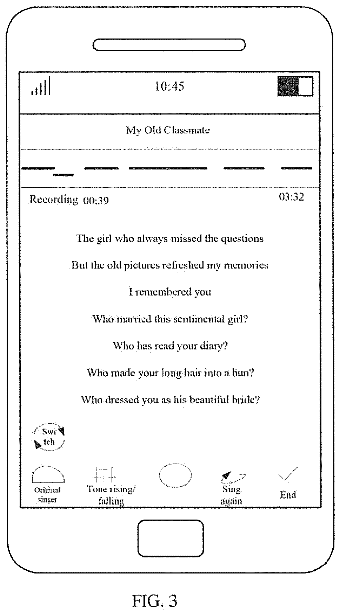

Generally, the user may inadvertently adjust the breath and emotion during singing to match the current lyrics being sung, which makes it difficult for the user to accurately capture the breath and emotion used in singing the previous sentence of the lyrics during the process of re-recording the recorded clip to be re-recorded, resulting in a poor listening effect of the re-recorded audio file. To improve the listening effect of the re-recorded audio file, after the recorded clip to be re-recorded is determined, a first recorded clip to be played is further determined by the mobile terminal from the recorded audio file according to the start time of the recorded clip to be re-recorded, the first recorded clip may use the first time as the end time. The first recorded clip may be several sentences or several paragraphs of the lyrics prior to the recorded clip to be re-recorded, and the present embodiment does not specifically limit the length of the first recorded clip. To make the re-recorded audio file more natural and achieve a better playing effect, when determining the first recorded clip, the mobile terminal can select the length of the first recorded clip as long as possible. Taking the recording of the song "My Old Classmate" for example and referring to FIG. 3, FIG. 3 shows a recording interface of the song "My Old Classmate". If the user wants to re-record the lyrics "to remember my old classmate", i.e., the recorded clip to be re-recorded is "to remember my old classmate", and it is acquired that the start time of the lyrics is the 39th second of the audio file, the mobile terminal can use "the girl who always missed the questions, but the old pictures refreshed my memories" as the first recorded clip.

Then, the mobile terminal plays the first recorded clip that has been recorded through a playback device or a listening device such as an earphone or a loudspeaker. To restore the last recording scene to the utmost extent, in the process of playing the first recorded clip that has been recorded, the mobile terminal also plays, according to the time corresponding to the first recorded file, an accompaniment file corresponding to the time; the playing duration of the accompaniment file is the same as that of the audio file, and the recorded clips in the audio file are in one-to-one correspondence with the accompaniment clips in the accompaniment file. For example, the start time of the first recorded clip is 01:06 of the audio file, and the end time is 02:13 of the audio file, the mobile terminal also synchronously plays the accompaniment file corresponding to the first recorded clip while playing the first recorded clip through the microphone.

The method provided by the embodiments of the present disclosure, as shown in FIG. 2, further includes: collecting, by the mobile terminal, second vocal data of the user to obtain a third recorded clip during the process of playing the first recorded clip that has been recorded in step 203.

When the mobile terminal plays the first recorded clip that has been recorded, the user can re-sing the first recorded clip following the first recorded clip and the corresponding accompaniment file, and at this time, the apparatus such as the microphone collects second vocal data of the user and stores the collected second vocal data in a storage medium such as a cache to obtain a third recorded clip. The third recorded clip is an audio clip collected by a sound collection apparatus during the period from the start time of the first recorded clip to the first time. The third recorded clip may have the same content as the first recorded clip, and may also be only a part of the first recorded clip.

The method provided by the embodiments of the present disclosure, as shown in FIG. 2, further includes: collecting, by the mobile terminal, upon reaching the first time, first vocal data of the user to obtain a second recorded clip, and taking, by the mobile terminal, the second recorded clip and the third recorded clip as recorded clips recorded this time in step 204.

Upon reaching the first time, i.e., the end time of the first recorded clip, the mobile terminal collects first vocal data of the user through the apparatus such as a microphone and stores the collected first vocal data in a storage medium such as a cache to obtain a second recorded clip. The second recorded clip may have the same audio content as the recorded clip to re-recorded, and the same audio content herein refers to the same lyrics in the audio file of the second recorded clip corresponding to the recorded clip to be re-recorded.

At this time, in this re-recording process, two recorded clips i.e., a third recorded clip and a second recorded clip, are recorded by the mobile terminal in total, the mobile terminal uses the third recorded clip and the second recorded clip as recorded clips recorded this time.

The method provided by the embodiments of the present disclosure, as shown in FIG. 2, further includes: processing, by the mobile terminal, the first recorded clip and the second recorded clip to obtain a re-recorded audio file in step 205.

After the above steps 201-204, the mobile terminal acquires the second recorded clip that is more satisfactory to the user; however, the second recorded clip is not connected to the first recorded clip but is connected to the third recorded clip, and the first recorded clip is not connected to the second recorded clip but is connected to the recorded clip to be re-recorded. At this time, the mobile terminal needs to process the first recorded clip and the second recorded clip, so that the first recorded clip and the second recorded clip can be naturally spliced together to obtain a re-recorded audio file.

When processing the first recorded clip and the second recorded clip, the mobile terminal can apply the following steps 2051-2056:
acquiring, by the mobile terminal, a first sound waveform corresponding to the first recorded clip, and acquiring a second sound waveform corresponding to the second recorded clip.

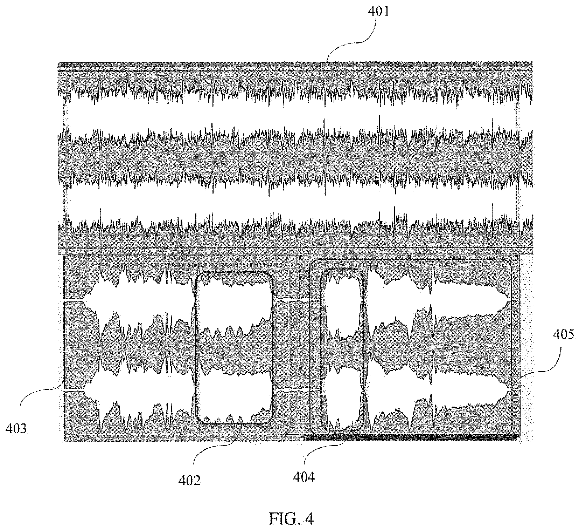

It is well known that transmission of sound in the air can form sound waves, and each sound wave corresponds to a sound waveform. The present embodiment processes the first recorded clip and the second recorded clip based on the sound waveform corresponding to the first recorded clip and the sound waveform corresponding to the second recorded clip. To facilitate subsequent description, in the present embodiment, a sound waveform corresponding to the first recorded clip is referred to as a first sound waveform, and a sound waveform corresponding to the second recorded clip is referred to as a second sound waveform. With reference to FIG. 4, 401 is the sound waveform corresponding to the accompaniment file, 402 is a first sound waveform corresponding to the first recorded clip, 403 is a sound waveform corresponding to a recorded clip prior to the first recorded clip, 404 is a sound waveform corresponding to the recorded clip to be re-recorded, and 405 is a sound waveform corresponding to the recorded clip that has been recorded by taking the recorded clip to be re-recorded as the start point.

In the present embodiment, when acquiring the first sound waveform corresponding to the first recorded clip, the mobile terminal can input the first recorded clip into an oscilloscope to obtain the first sound waveform corresponding to the first recorded clip. When acquiring the second sound waveform corresponding to the second recorded clip, the mobile terminal can input the second recorded clip into the oscilloscope to obtain the second sound waveform corresponding to the second recorded clip.

The aforementioned content is merely an approach of acquiring the first sound waveform corresponding to the first recorded clip and the second sound waveform corresponding to the second recorded clip, and in the practical application, other approaches can also be adopted to acquire the first sound waveform corresponding to the first recorded clip and the second sound waveform corresponding to the second recorded clip. The details are not repeated in this embodiment again.

When processing the first recorded clip and the second recorded clip, the mobile terminal can further apply the following step: acquiring, by the mobile terminal, a stable start point and a second time corresponding to the stable start point from the first sound waveform in step 2052.

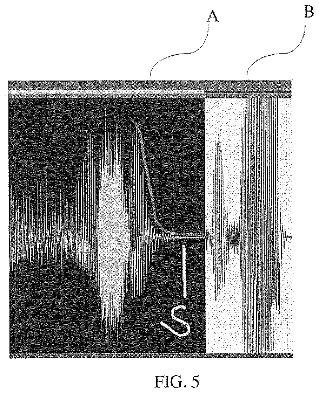

In the process of completing singing of one sentence of the lyrics, the sound waveform corresponding to the recorded clip collected by the apparatus such as the microphone becomes stable, and the amplitude of the sound waveform decreases gradually. From the start point where the sound waveform becomes stable, the recorded clip collected by the apparatus, such as the microphone, usually contains only the user's breath, without vocal data. In the present embodiment, the start point where the sound waveform becomes stable is referred to as a stable start point, and the time corresponding to the stable start point is referred to as a second time. The second time herein may be the first minute of the audio file, the third minute of the audio file and so on. The present embodiment does not specifically limit the length of the second time, but only require that the second time is earlier than the first time. With reference to FIG. 5, A is the first sound waveform corresponding to the first recorded clip, B is the second sound waveform corresponding to the recorded clip to be re-recorded, S is the stable start point in the first sound waveform, and the time corresponding to S is set to be t1.

When processing the first recorded clip and the second recorded clip, the mobile terminal can further apply the following step: acquiring, by the mobile terminal, a rising start point and a third time corresponding to the rising start point from the second sound waveform in step 2053.

In the process of singing one sentence of the lyrics, a sound waveform corresponding to the recorded clip collected by the apparatus such as the microphone rises gradually, and the amplitude of the sound waveform increases gradually. From the start point where the sound waveform rises, the recorded clip collected by the apparatus such as the microphone contains the vocal data of the user. In the present embodiment, a start point where the sound waveform rises is referred to as a rising start point, and a time corresponding to the rising start point is referred to as a third time, where the third time may be 03:00 of the audio file, 05:00 of the audio file and so on. This embodiment does not specifically limit the length of the third time, but only require that the first time is earlier than the third time. With reference to FIG. 6, A' is the sound waveform corresponding to the third recorded clip, C is the sound waveform corresponding to the second recorded clip, E is the rising start point in the second sound waveform, and the time corresponding to E is set to be t2.

When processing the first recorded clip and the second recorded clip, the mobile terminal can further apply the following step: taking, by the mobile terminal, the second time as a start time to select a fourth recorded clip from the recorded clips recorded this time in step 2054.

To acquire an audio file with better listening effect, the mobile terminal stores the collected recorded clips, i.e., both the recorded clips collected last time and the recorded clips collected this time, in the storage medium such as the cache. To naturally splice the first recorded clip and the second recorded clip together, the mobile terminal can splice the parts without vocal data in the first recorded clip and the second recorded clip.

To achieve seamless splicing, the mobile terminal can take the second time as the start time to select a fourth recorded clip from the recorded clips recorded this time, the fourth recorded clip including a part of the third recorded clip and the second recorded clip; the part of the third recorded clip takes the second time as the start time and the first time as the end time. With reference to FIG. 7, the fourth recorded clip includes a part of the third recorded clip and the second recorded clip C.

When processing the first recorded clip and the second recorded clip, the mobile terminal can further apply the following step: taking, by the mobile terminal, the third time as end time to select a fifth recorded clip from recorded clips recorded last time, the recorded clips recorded last time including the recorded clip to be re-recorded and the first recorded clip in step 2055.

In order to better splice the first recorded clip and the second recorded clip together, the mobile terminal also selects a fifth recorded clip from recorded clips recorded last time with the third time as the end time; the recorded clips recorded last time include the recorded clip to be re-recorded and the first recorded clip. Accordingly, the fifth recorded clip includes the first recorded clip and a part of the recorded clip to be re-recorded; the part of the recorded clip to be re-recorded takes the first time as the start time and the third time as the end time. With reference to FIG. 7, the fifth recorded clip includes the first recorded clip A and a part of the recorded clip to be re-recorded.

When processing the first recorded clip and the second recorded clip, the mobile terminal can further apply the following step: processing, by the mobile terminal, the fourth recorded clip and the fifth recorded clip to obtain a re-recorded audio file in step 2056.

The mobile terminal can adopt the following steps a-c for processing the fourth recorded clip and the fifth recorded clip to obtain a re-recorded audio file.
a. The mobile terminal compares a sound waveform corresponding to the fourth recorded clip with a sound waveform corresponding to the fifth recorded clip.
   In general, the sound waveform of the recorded clip can reflect the amplitude of the recorded clip at a certain moment, the mobile terminal can acquire the parts with small amplitude in the fourth recorded clip and the fifth recorded clip through comparing the sound waveform corresponding to the fourth recorded clip with the sound waveform corresponding to the fifth recorded clip, where the part with small amplitude does not contain vocal, so splicing the fourth recorded clip and the fifth recorded clip at this part does not affect the integrity of the entire audio file.
b. The mobile terminal acquires a first target sound waveform from the sound waveform corresponding to the fourth recorded clip, and acquires a second target sound waveform from the sound waveform corresponding to the fifth recorded clip.
   The mobile obtain can acquire a first target sound waveform from the sound waveform corresponding to the fourth recorded clip and acquire a second target sound waveform from the sound waveform corresponding to the fifth recorded clip through comparing the sound waveform corresponding to the fourth recorded clip with the sound waveform corresponding to the fifth recorded clip. The first target sound waveform and the second target sound waveform have the same start time and end time, where the first target sound waveform is a part with small amplitude in the fourth recorded clip, and the second target sound waveform is a part with small amplitude in the fifth recorded clip.
c. The mobile terminal fits the first target sound waveform and the second target sound waveform, so that the fourth recorded clip and the fifth recorded clip are spliced together to obtain the re-recorded audio file.

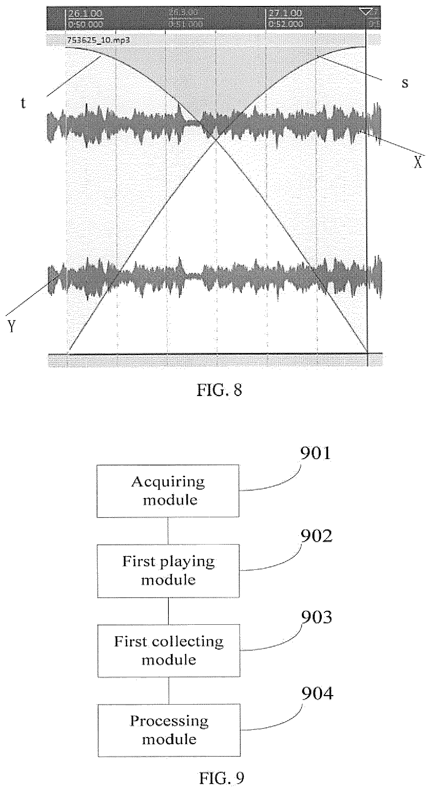

When fitting the first target sound waveform and the second target sound waveform, the mobile terminal can select a linear function, a quadratic function, a specified parameter and so on as weighted values of the first target sound waveform and the second target sound waveform, and can fit the amplitude of the first target sound waveform and the amplitude of the second target sound waveform based on the selected weight values. Through the fitting, the fourth recorded clip and the fifth recorded clip can be spliced together, and then the first recorded clip and the second recorded clip can also spliced together, so that the re-recorded audio file is obtained. To ensure the spliced fourth recorded clip and fifth recorded clip to be more natural, when selecting weighted values for the first target sound waveform and the second target sound waveform, the mobile terminal can select the same value or function for the weighted value of the first target sound waveform and the weighted value of the second target sound waveform. With reference to FIG. 8, FIG. 8 is a schematic diagram of fitting the first target sound waveform and the second target sound waveform, where X is the first target sound waveform, Y is the second target sound waveform, s and t are quadratic functions, s is the weighted value corresponding to the first target sound waveform, and t is the weighted value corresponding to the second target sound waveform. Based on the quadratic functions s and t, the mobile terminal can connect the fourth recorded clip and the fifth recorded clip smoothly through fitting the first target sound waveform and the second target sound waveform.

It should be noted that, the above is an example in which the mobile terminal only collects the vocal data of the user during the process of re-recording the audio file. In the practical application, the mobile terminal may simultaneously collect vocal data and accompaniment data, and integrate the collected vocal data and accompaniment data into a re-recorded sound waveform file.

According to the method provided by embodiments of the present disclosure, there is no need to repeatedly record a sound waveform file. When re-recording the recorded clip to be re-recorded, the user can listen to the previously recorded clips by playing recorded clips prior to recorded clip to be re-recorded , thereby adjusting the user's breath, distance from the microphone, timbre and so on. Based on the collected singing data, the audio file obtained through editing and splicing by the mobile terminal is better in listening effect, and the spliced trace thereof is imperceptible to the listener.

With reference to FIG. 9, embodiments of the present disclosure provide a schematic diagram of a structure of an audio file re-recording device. The device includes:
an acquiring module 901, configured to determine a first time, the first time being a start time of a recorded clip to be re-recorded in an audio file;
a first playing module 902, configured to play a first recorded clip that has been recorded, and the first recorded clip taking the first time as an end time;
a first collecting module 903, configured to collect, upon reaching the first time, first vocal data of a user to obtain a second recorded clip; and
a processing module 904, configured to process the first recorded clip and the second recorded clip to obtain a re-recorded audio file.

In the embodiment of the present disclosure, the device further includes:
a second collecting module, configured to collect second vocal data of the user during the process of playing the first recorded clip that has been recorded to obtain a third recorded clip, and take the second recorded clip and the third recorded clip as recorded clips recorded this time.

In the embodiment of the present disclosure, the processing module 904 is configured to acquire a first sound waveform corresponding to the first recorded clip and acquire a second sound waveform corresponding to the second recorded clip; acquire a stable start point and a second time corresponding to the stable start time from the first sound waveform; acquire a rising start time and a third time corresponding to the rising start time from the second sound waveform; take the second time as a start time to select a fourth recorded clip from the recorded clips recorded this time; take the third time as an end time to select a fifth recorded clip from the recorded clips recorded last time, where the recorded clips recorded last time including a recorded clip to be re-recorded and the first recorded clip; and process the fourth recorded clip and the fifth recorded clip to obtain a re-recorded audio file.

Herein, the second time is earlier than the first time, and the first time is earlier than the third time.

In another embodiment of the present disclosure, the processing module 904 is further configured to: compare a sound waveform corresponding to the fourth recorded clip with a sound waveform corresponding to the fifth recorded clip; acquire a first target sound waveform from the sound waveform corresponding to the fourth recorded clip, and acquire a second target sound waveform from the sound waveform corresponding to the fifth recorded clip, the first target sound waveform and the second target sound waveform having the same start time and end time; and fit the first target sound waveform and the second target sound waveform, so that the fourth recorded clip and the fifth recorded clip are spliced together to obtain the re-recorded audio file.

In another embodiment of the present disclosure, the device further includes:
a second playing module, configured to play a corresponding accompaniment file during the process of playing recorded clips that have been recorded and recording the recorded clips.

In conclusion, by means of the device provided by embodiments of the present disclosure, there is no need to repeatedly record a sound waveform file When re-recording the recorded clip to be re-recorded, the user can listen to the previously recorded clips by playing recorded clips prior to recorded clip to be re-recorded, thereby adjusting the user's breath, distance from the microphone, timbre and so on. Based on the collected singing data, the audio file obtained through editing and splicing by the mobile terminal is better in listening effect, and the spliced trace thereof is imperceptible to the listener.

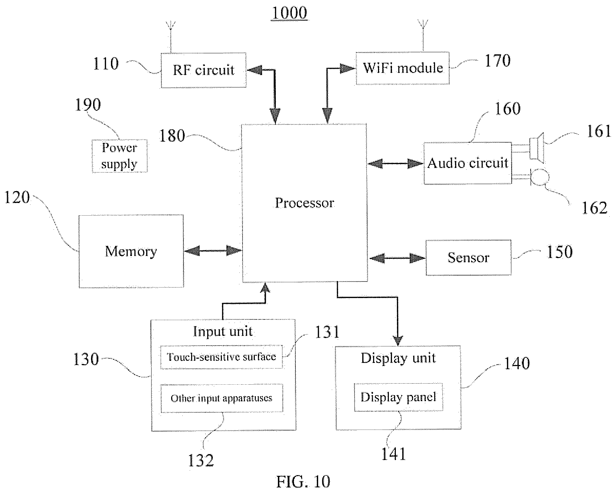

With reference to FIG. 10, FIG. 10 is a schematic diagram of a structure of an audio file re-recording terminal involved in embodiments of the present disclosure. The terminal can be configured to implement the audio file re-recording methods provided in the aforementioned embodiments.

Specifically, a terminal 1000 may include components such as a Radio Frequency (RF) circuit 110, a memory 120 including one or more computer readable storage media, an input unit 130, a display unit 140, a sensor 150, an audio circuit 160, a Wireless Fidelity (WiFi) module 170, a processor 180 including one or more processing cores, and a power supply 190. A person of ordinary skill in the art can understand that the terminal structure shown in FIG. 10 does not constitute a limitation on the terminal, and may include more or less components than those shown in the drawing, or combine some components, or adopt different component arrangements.

Herein, the RF circuit 110 may be configured to receive and transmit signals in the information reception and transmission or in a call process, particularly, to receive downlink information of a base station and then forward the downlink information to the one or more processor 180 for processing. Moreover, the RF circuit 110 may be configured to send uplink data to the base station. In general, the RF circuit 110 includes, but not limited to, an antenna, at least one amplifier, a tuner, one or more oscillators, a Subscriber Identity Module (SIM) card, a transceiver, a coupler, a Low Noise Amplifier (LNA), a duplexer and so on. In addition, the RF circuit 110 can also communicate with a network and other apparatus through wireless communication. The wireless communication can use any communication standard or protocol, including but not limited to, Global System of Mobile Communication (GSM), General Packet Radio Service (GPRS), Code Division Multiple Access (CDMA), Wideband Code Division Multiple Access (WCDMA), Long Term Evolution (LTE), e-mail, Short Messaging Service (SMS) and so on.

The memory 120 may be configured to store software programs and modules, and the processor 180 executes various functional applications and data processing through running the software applications and modules stored in the memory 120. The memory 120 may mainly include a program storage area and a data storage area, where the program storage area can store operating systems, an application program required by at least one function (such as, a sound playing function and an image playing function) and so on, and the data storage area can store data (such as, audio data and an address book) created according to the utilization of the terminal 1000 and so on. In addition, the memory 120 may include a high-speed random access memory, and may also include a nonvolatile memory, such as at least one disk storage apparatus, a flash memory, or other volatile solid-state storage apparatuses. Accordingly, the memory 120 may also include a memory controller configured to provide access of the processor 180 and the input unit 130 to the memory 120.

The input unit 130 may be configured to receive input numeric or character information, and generate keyboard, mouse, operating rod, optical or trackball signal input related to user settings and functional control. Specifically, the input unit 130 may include a touch-sensitive surface 131 and other input apparatuses 132. The touch-sensitive surface 131 is also referred to as a touch display screen or a touchpad, and can collect touch operations of the user on the touch-sensitive surface 131or near the touch-sensitive surface 131 (e.g., operations of any suitable object or accessory such as a finger of the user or a stylus on the touch-sensitive surface 131 or near the touch-sensitive surface 131), and drive a corresponding connecting apparatus according to a pre-set program. Optionally, the touch-sensitive surface 131 may include two parts: a touch detection apparatus and a touch controller, where the touch detection apparatus detects a touch orientation of the user, detects a signal produced by the touch operation, and transmits the signal to the touch controller; the touch controller receives touch information from the touch detection apparatus, converts it into contact coordinates, sends it to the processor 180, and can receive and execute a command sent by the processor 180. In addition, the touch-sensitive surface 131 can be achieved in various types of sound waves such as a resistive sound wave, a capacitive sound wave, an infrared sound wave and a surface sound wave. In addition to the touch-sensitive surface 131, the input unit 130 may also include other input apparatuses 132. Specifically, the other input apparatuses 132 may include but not limited to, one or more of a physical keyboard, function keys (such as a volume control key and an on/off key, etc.), a trackball, a mouse, a joystick and so on.

The display unit 140 may be configured to display information inputted by the user or information provided to the user, and various graphic user interfaces of the terminal 1000. These graphic user interfaces may consist of graphs, texts, icons, videos, and any combination thereof. The display unit 140 may include a display panel 141. Optionally, the display panel 141 may be configured in the form of a Liquid Crystal Display (LCD), an Organic Light-Emitting Diode (OLED) and so on. Furthermore, the touch-sensitive surface 131 can cover the display panel 141, and when the touch-sensitive surface 131 detects a touch operation on the touch-sensitive surface 131 or near the touch-sensitive surface 131, the touch operation is transmitted to the processor 180 to determine the type of a touch event, and then the processor 180 provides a corresponding visual output on the display panel 141 according to the type of the touch event. Although in FIG. 10, the touch-sensitive surface 131 and the display panel 141 serve as two independent components to achieve input and output functions, in some embodiments, the touch-sensitive surface 131 and the display panel 141 can be integrated to achieve the input and output functions.

The terminal 1000 may also include at least one sensor 150, e.g., a light sensor, a motor sensor and other sensors. Specifically, the light sensor may include an ambient light sensor and a proximity sensor, where the ambient light sensor can adjust the brightness of the display panel 141 according to the intensity of the ambient light, and the proximity sensor can turn off the display panel 141 and/or backlight when the terminal 1000 moves to the ear. As one of motion sensors, a gravity acceleration sensor can detect the magnitude of acceleration in all directions (generally the three axes), can detect the strength and direction of the gravity in a static state, and can be configured to identify applications of mobile phone gestures (e.g., portrait and landscape orientation switching, related games, magnetometer gesture calibration), vibration identification related functions (e.g., a pedometer and tap) and so on. Regarding other sensors that can be further configured in the terminal 1000, such as a gyroscope, a barometer, a hygrometer, a thermometer and an infrared sensor, the details are not described here again.

The audio circuit 160, a loudspeaker 161, and a microphone 162 can provide an audio interface between the user and the terminal 1000. The audio circuit 160 can transmit an electric signal converted from the received audio data to the loudspeaker 161, and the loudspeaker 161 converts the electric signal into a sound signal to output; on the other hand, the microphone 162 converts the collected sound signal into an electric signal, and the audio circuit 160 receives and converts the electric signal into audio data to output to the processor 180 for processing, and then the processed audio data is transmitted to, for example, another terminal via the RF circuit 110, or the audio data is outputted to the memory 120 for further processing. The audio circuit 160 may also include an earplug jack to provide communication between a peripheral earphone and the terminal 1000.

WiFi is a short-distance wireless transmission technology. The terminal 1000 can help a user to receive and send e-mails, browse webpages, access streaming media and so on through the WiFi module 170. WiFi provides wireless broadband Internet access for the user. Although FIG. 10 shows the WiFi module 170, it can be understood that, the WiFi module 170 is not a necessary component of the terminal 1000 and absolutely can be omitted as needed without changing the scope of the nature of disclosure.

The processor 180 is a control center of the terminal 1000, which connected to each part of the entire mobile phone via various interfaces and circuits. The processor 180 executes various functions of the terminal 1000 and processes data thereof through running or executing the software programs and/or modules stored in the memory 120 as well as invoking data stored in the memory 120, so as to monitor the mobile phone. Optionally, the processor 180 may include one or more processing cores. Optionally, the processor 180 may be integrated an application processor and a modem processor, where the application processor mainly processes an operating system, user interfaces, application programs and so on, and the modem processor mainly processes wireless communication. It can be understood that the above-mentioned modem processor may not be integrated into the processor 180.

The terminal 1000 may further include a power supply 190 (e.g., a battery) for supplying power to each component. Optionally, the power supply can be logically connected to the processor 180 through a power management system, so as to implement functions, such as charging management, discharging management, power consumption management and so on, through the power management system. The power supply 190 may also include any one or more of direct-current or alternating-current power supply, a recharging system, a power failure detection circuit, a power converter or inverter, a power status indicator, and any other components.

Although not shown, the terminal 1000 may also include a camera, a Bluetooth module and so on. The details are not described here again. Specifically, in the present embodiment, the display unit of the terminal 1000 is a touch screen monitor.

The terminal 1000 further includes a memory and one or more programs, where the one or more programs are stored in the memory and are configured to be executed by one or more processors. The one or more programs include instructions for executing the following operations:
determining a first time, the first time being a start time of a recorded clip to be re-recorded in an audio file;
playing a first recorded clip that has been recorded, the first recorded clip taking the first time as an end time in the audio file;
collecting, upon reaching the first time, first vocal data of a user to obtain a second recorded clip; and
processing the first recorded clip and the second recorded clip to obtain a re-recorded audio file.

It is assumed that the aforementioned contents relate to a first possible implementation, in a second possible implementation provided on a basis of the first possible implementation mode, the memory of the terminal further includes instructions for executing the following operations:
collecting second vocal data of the user during the process of playing the first recorded clip that has been recorded to obtain a third recorded clip; and
taking the second recorded clip and the third recorded clip as recorded clips recorded this time.

It is assumed that the aforementioned contents relate to the second possible implementation, in a third possible implementation provided on a basis of the second possible implementation, the memory of the terminal further includes instructions for executing the following operations:
processing the first recorded clip and the second recorded clip to obtain a re-recorded audio file, including:
acquiring a first sound waveform corresponding to the first recorded clip, and acquiring a second sound waveform corresponding to the second recorded clip;
determining, from the first sound waveform, a stable start point and a second time corresponding to the stable start point in the audio file;
determining, from the second sound waveform, a rising start point and a third time corresponding to the rising start point in the audio file;
taking the second time as a start time to select a fourth recorded clip from the recorded clips recorded this time;
taking the third time as an end time to select a fifth recorded clip from recorded clips recorded last time, the recorded clips recorded last time comprising the recorded clip to be re-recorded and the first recorded clip; and
processing the fourth recorded clip and the fifth recorded clip to obtain a re-recorded audio file.

Herein, the second time is earlier than the first time, and the first time is earlier than the third time.

It is assumed that the aforementioned contents relate to the third possible implementation, in a fourth possible implementation provided on a basis of the third possible implementation, the memory of the terminal further includes instructions for executing the following operations:
processing the fourth recorded clip and the fifth recorded clip to obtain a re-recorded audio file, including:
comparing a sound waveform corresponding to the fourth recorded clip with a sound waveform corresponding to the fifth recorded clip;
acquiring a first target sound waveform from the sound waveform corresponding to the fourth recorded clip, and acquiring a second target sound waveform from the sound waveform corresponding to the fifth recorded clip, the first target sound waveform and the second target sound waveform having the same start time and end time; and
fitting the first target sound waveform and the second target sound waveform, so that the fourth recorded clip and the fifth recorded clip are spliced together to obtain the re-recorded audio file.

It is assumed that the aforementioned contents relate to the fourth possible implementation, in a fifth possible implementation provided on a basis of the fourth possible implementation, the memory of the terminal further includes an instruction for executing the following operation:
playing a corresponding accompaniment file during the process of playing recorded clips that have been recorded and recording the recorded clips.

According to the terminal provided by embodiments of the present disclosure, when re-recording a recorded clip to be re-recorded, the user can listen to the previously recorded clips by playing clips prior to the recorded clip to be re-recorded, so as to adjust the user's breath, distance from the microphone, timber and so on. Based on the collected singing data, the audio file obtained through editing and splicing by the mobile terminal is better in listening effect, and the spliced trace thereof is imperceptible to the listener.

Embodiments of the present disclosure further provide a computer readable storage medium. The computer readable storage medium can be a computer readable storage medium included in the memory in the aforementioned embodiment, and can also be a computer readable storage medium that independently exists and is not assembled in the terminal. The computer readable storage medium stores one or more programs, and the one or more programs are used by one or more processors to re-record an audio file through the following steps:
determining a first time, the first time being a start time of a recorded clip to be re-recorded in an audio file;
playing a first recorded clip that has been recorded, the first recorded clip taking the first time as an end time in the audio file;
collecting, upon reaching the first time, first vocal data of a user to obtain a second recorded clip; and
processing the first recorded clip and the second recorded clip to obtain a re-recorded audio file.

It is assumed that the aforementioned contents relate to a first possible implementation, in a second possible implementation provided on a basis of the first possible implementation, the memory of the terminal further includes instructions for executing the following operations:
collecting second vocal data of the user during the process of playing the first recorded clip that has been recorded to obtain a third recorded clip; and
taking the second recorded clip and the third recorded clip as recorded clips recorded this time.

It is assumed that the aforementioned contents relate to the second possible implementation, in a third possible implementation provided on a basis of the second possible implementation, the memory of the terminal further includes instructions for executing the following operations:
acquiring a first sound waveform corresponding to the first recorded clip, and acquiring a second sound waveform corresponding to the second recorded clip;
acquiring, from the first sound waveform, a stable start point and a second time corresponding to the stable start point;
acquiring, from the second sound waveform, a rising start point and a third time corresponding to the rising start point;
taking the second time as a start time to select a fourth recorded clip from recorded clips recorded this time;
taking the third time as an end time to select a fifth recorded clip from recorded clips recorded last time, the recorded clips recorded last time comprising the recorded clip to be re-recorded and the first recorded clip; and
processing the fourth recorded clip and the fifth recorded clip to obtain a re-recorded audio file.

Herein, the second time is earlier than the first time, and the first time is earlier than the third time.

It is assumed that the aforementioned contents relate to the third possible implementation, in a fourth possible implementation provided on a basis of the third possible implementation, the memory of the terminal further includes instructions for executing the following operations:
comparing a sound waveform corresponding to the fourth recorded clip with a sound waveform corresponding to the fifth recorded clip;
acquiring a first target sound waveform from the sound waveform corresponding to the fourth recorded clip, and acquiring a second target sound waveform from the sound waveform corresponding to the fifth recorded clip, the first target sound waveform and the second target sound waveform having the same start time and end time; and
fitting the first target sound waveform and the second target sound waveform so that the fourth recorded clip and the fifth recorded clip are spliced together to obtain the re-recorded audio file.

It is assumed that the aforementioned contents relate to the fourth possible implementation, in a fifth possible implementation provided on a basis of the fourth possible implementation, the memory of the terminal further includes an instruction for executing the following operation:
playing a corresponding accompaniment file during the process of playing recorded clips that have been recorded and recording the recorded clips.

It should be noted that: when re-recording an audio file by the audio file re-recording device provided by the aforementioned embodiments, the above-mentioned division of various functional modules is merely taken as an example. In the practical application, the above functions may be allocated to different functional modules according to requirements. That is, the internal structure of the audio file re-recording device can be divided into different functional modules, so as to achieve all or some of the functions described above. In addition, the aforementioned embodiments of the audio file re-recording device and the audio file re-recording method belong to the same concept. The specific implementation process thereof is described in detail in the method embodiment, which will not be described here again.

A person of ordinary skill in the art can understand that all or some of steps of the aforementioned embodiments can be completed by the hardware, or by the programs which instruct the related hardware. The programs can be stored in a computer readable storage medium. The above-mentioned storage medium can be a read-only memory, a magnetic disk or optical disk and so on.

The above descriptions are merely preferred embodiments of the present disclosure and are not intended to limit the present disclosure. Any modification, or improvement made within the principle of the present disclosure shall fall within the sope of protection of the present disclosure.

## Claims

1. An audio file re-recording method, comprising:
determining (101; 201) a first time, the first time being a first start time of a recorded clip to be re-recorded in an audio file;
playing (102; 202) a first recorded clip that has been recorded, the first recorded clip taking the first time as a first end time in the audio file, and collecting second vocal data of the user during the process of playing the first recorded clip that has been recorded to obtain a third recorded clip;
collecting (103), upon reaching the first time, first vocal data of a user to obtain a second recorded clip and taking (204) the second recorded clip and the third recorded clip as recorded clips recorded this time; and
processing (104; 205) the first recorded clip and the second recorded clip to obtain a re-recorded audio file, wherein said processing comprises:
acquiring (2051) a first sound waveform corresponding to the first recorded clip, and acquiring a second sound waveform corresponding to the second recorded clip;
determining (2052), from the first sound waveform, a stable start point and a second time corresponding to the stable start point in the audio file;
determining (2053), from the second sound waveform, a rising start point and a third time corresponding to the rising start point in the audio file;
taking (2054) the second time as a second start time to select a fourth recorded clip from the recorded clips recorded this time;
taking (2055) the third time as a second end time to select a fifth recorded clip from recorded clips recorded last time, and the recorded clips recorded last time consisting of the recorded clip to be re-recorded and the first recorded clip; and
processing (2056) the fourth recorded clip and the fifth recorded clip to obtain the re-recorded audio file;
wherein the second time is earlier than the first time, and the first time is earlier than the third time.

2. The method according to claim 1, wherein the processing the fourth recorded clip and the fifth recorded clip to obtain the re-recorded audio file comprises:
comparing a sound waveform corresponding to the fourth recorded clip with a sound waveform corresponding to the fifth recorded clip;
acquiring a first target sound waveform from the sound waveform corresponding to the fourth recorded clip, and acquiring a second target sound waveform from the sound waveform corresponding to the fifth recorded clip, and the first target sound waveform and the second target sound waveform having a same start time and a same end time; and
fitting the first target sound waveform and the second target sound waveform, so that the fourth recorded clip and the fifth recorded clip are spliced together to obtain the re-recorded audio file.

3. The method according to claim 1, further comprising:
playing a corresponding accompaniment file in the process of playing recorded clips that have been recorded and recording the recorded clips.

4. An audio file re-recording device, comprising:
one or more processors; and
a memory having program modules stored thereon, wherein the program modules comprises:
an acquiring module (901), configured to determine a first time, the first time being a first start time of a recorded clip to be re-recorded in an audio file;
a first playing module (902), configured to play a first recorded clip that has been recorded, the first recorded clip taking the first time as a first end time in the audio file;
a first collecting module (903), configured to collect, upon reaching the first time, first vocal data of a user to obtain a second recorded clip;
a second collecting module, configured to collect second vocal data of the user during a process of playing the first recorded clip that has been recorded to obtain a third recorded clip, and take the second recorded clip and the third recorded clip as recorded clips recorded this time; and
a processing module (904), configured to process the first recorded clip and the second recorded clip to obtain a re-recorded audio file, said processing module being configured to:
acquire a first sound waveform corresponding to the first recorded clip, and acquire a second sound waveform corresponding to the second recorded clip;
determine, from the first sound waveform, a stable start point and a second time corresponding to the stable start point in the audio file;
determine, from the second sound waveform, a rising start point and a third time corresponding to the rising start point in the audio file;
take the second time as a second start time to select a fourth recorded clip from the recorded clips recorded this time;
take the third time as a second end time to select a fifth recorded clip from recorded clips recorded last time, and the recorded clips recorded last time consisting of the recorded clip to be re-recorded and the first recorded clip; and
process the fourth recorded clip and the fifth recorded clip to obtain the re-recorded audio file;
wherein the second time is earlier than the first time, and the first time is earlier than the third time.

5. The device according to claim 4, wherein the processing module is further configured to:
compare a sound waveform corresponding to the fourth recorded clip with a sound waveform corresponding to the fifth recorded clip;
acquire a first target sound waveform from the sound waveform corresponding to the fourth recorded clip, and acquire a second target sound waveform from the sound waveform corresponding to the fifth recorded clip, and the first target sound waveform and the second target sound waveform having a same start time and a same end time; and
fit the first target sound waveform and the second target sound waveform, so that the fourth recorded clip and the fifth recorded clip are spliced together to obtain the re-recorded audio file.

6. The device according to claim 4, further comprising:
a second playing module, configured to play a corresponding accompaniment file during the process of playing recorded clips that have been recorded and recording the recorded clips.

7. A non-volatile storage medium (120) having program instructions stored thereon, wherein when the program instructions are executed by a computing apparatus (1000), the computing apparatus (1000) being configured to execute the steps of a method according to any one of claims 1 to 3.

## Patentansprüche

1. Verfahren zur Neuaufnahme von Audiodateien, umfassend:
Bestimmen (101; 201) einer ersten Zeit, wobei die erste Zeit eine erste Startzeit eines aufgenommenen Clips ist, der in einer Audiodatei neu aufgenommen werden soll,
Abspielen (102; 202) eines ersten aufgenommenen Clips, der aufgenommen wurde, wobei der erste aufgenommene Clip die erste Zeit als erste Endzeit in der Audiodatei nimmt, und Sammeln von zweiten Stimmdaten des Benutzers während des Prozesses des Abspielens des ersten aufgenommenen Clips, der aufgenommen wurde, um einen dritten aufgenommenen Clip zu erhalten,
Sammeln (103) erster Stimmdaten eines Benutzers beim Erreichen der ersten Zeit, um einen zweiten aufgenommenen Clip zu erhalten und Nehmen (204) des zweiten aufgenommenen Clips und des dritten aufgenommenen Clips als diesmal aufgenommene Clips und
Verarbeiten (104; 205) des ersten aufgenommenen Clips und des zweiten aufgenommenen Clips, um eine neu aufgenommene Audiodatei zu erhalten, wobei das Verarbeiten umfasst:
Erlangen (2051) einer ersten Schallwellenform, die dem ersten aufgenommenen Clip entspricht, und Erlangen einer zweiten Schallwellenform, die dem zweiten aufgenommenen Clip entspricht,
Bestimmen (2052) eines stabilen Startpunkts und einer zweiten Zeit, die dem stabilen Startpunkt in der Audiodatei entspricht, aus der ersten Schallwellenform,
Bestimmen (2053) eines ansteigenden Startpunktes und einer dritten Zeit, die dem ansteigenden Startpunkt in der Audiodatei entspricht, aus der zweiten Schallwellenform,
Nehmen (2054) der zweiten Zeit als zweite Startzeit, um einen vierten aufgenommenen Clip aus den diesmal aufgenommenen Clips auszuwählen,
Nehmen (2055) der dritten Zeit als zweite Endzeit, um einen fünften aufgenommenen Clip aus den beim letzten Mal aufgenommenen Clips auszuwählen, wobei die beim letzten Mal aufgenommenen Clips aus dem neu aufzunehmenden aufgenommenen Clip und dem ersten aufgenommenen Clip bestehen, und
Verarbeiten (2056) des vierten aufgenommenen Clips und des fünften aufgenommenen Clips, um die neu aufgenommene Audiodatei zu erhalten,
wobei die zweite Zeit früher als die erste Zeit und die erste Zeit früher als die dritte Zeit ist.

2. Verfahren nach Anspruch 1, wobei das Verarbeiten des vierten aufgenommenen Clips und des fünften aufgenommenen Clips zum Erhalten der neu aufgenommenen Audiodatei umfasst:
Vergleichen einer Schallwellenform, die dem vierten aufgenommenen Clip entspricht, mit einer Schallwellenform, die dem fünften aufgenommenen Clip entspricht,
Erlangen einer ersten Ziel-Schallwellenform aus der Schallwellenform, die dem vierten aufgenommenen Clip entspricht, und Erlangen einer zweiten Ziel-Schallwellenform aus der Schallwellenform, die dem fünften aufgenommenen Clip entspricht, wobei die erste Ziel-Schallwellenform und die zweite Ziel-Schallwellenform eine gleiche Startzeit und eine gleiche Endzeit haben, und
Anpassen der ersten Ziel-Schallwellenform und der zweiten Ziel-Schallwellenform, so dass der vierte aufgenommene Clip und der fünfte aufgenommene Clip zusammengefügt werden, um die neu aufgenommene Audiodatei zu erhalten.

3. Verfahren nach Anspruch 1, ferner umfassend:
Abspielen einer entsprechenden Begleitdatei bei der Wiedergabe von aufgenommenen Clips, die aufgenommen wurden, und Aufnahme der aufgenommenen Clips.

4. Audiodatei-Neuaufnahmegerät, umfassend:
einen oder mehreren Prozessoren und
einen Speicher mit darauf gespeicherten Programm-Modulen, wobei die Programm-Module umfassen:
ein Erlangungsmodul (901), das dazu konfiguriert ist, eine erste Zeit zu bestimmen, wobei die erste Zeit eine erste Startzeit eines aufgenommenen Clips ist, der in einer Audiodatei neu aufgenommen werden soll,
ein erstes Abspielmodul (902), das dazu konfiguriert ist, einen ersten aufgenommenen Clip abzuspielen, der aufgenommen wurde, wobei der erste aufgenommene Clip die erste Zeit als erste Endzeit in der Audiodatei nimmt,
ein erstes Sammelmodul (903), das dazu konfiguriert ist, bei Erreichen der ersten Zeit erste Stimmdaten eines Benutzers zu sammeln, um einen zweiten aufgenommenen Clip zu erhalten,
ein zweites Sammelmodul, das dazu konfiguriert ist, zweite Stimmdaten des Benutzers während eines Vorgangs der Wiedergabe des ersten aufgenommenen Clips, der aufgenommen wurde, zu sammeln, um einen dritten aufgenommenen Clip zu erhalten, und den zweiten aufgenommenen Clip und den dritten aufgenommenen Clip als diesmal aufgenommene Clips zu nehmen, und
ein Verarbeitungsmodul (904), das dazu konfiguriert ist, den ersten aufgenommenen Clip und den zweiten aufgenommenen Clip zu verarbeiten, um eine neu aufgenommene Audiodatei zu erhalten, wobei das Verarbeitungsmodul dazu konfiguriert ist:
eine erste Schallwellenform zu erlangen, die dem ersten aufgenommenen Clip entspricht, und eine zweite Schallwellenform zu erlangen, die dem zweiten aufgenommenen Clip entspricht,
aus der ersten Schallwellenform einen stabilen Startpunkt und eine zweite Zeit, die dem stabilen Startpunkt in der Audiodatei entspricht, zu bestimmen,
aus der zweiten Schallwellenform einen ansteigenden Startpunkt und eine dritte Zeit zu bestimmen, die dem ansteigenden Startpunkt in der Audiodatei entspricht,
die zweite Zeit als zweite Startzeit zu nehmen, um einen vierten aufgenommenen Clip aus den diesmal aufgenommenen Clips auszuwählen,
die dritte Zeit als zweite Endzeit nehmen, um einen fünften aufgenommenen Clip aus den beim letzten Mal aufgenommenen Clips auszuwählen, wobei die beim letzten Mal aufgenommenen Clips aus dem neu aufzunehmenden aufgenommenen Clip und dem ersten aufgenommenen Clip bestehen, und
den vierten aufgenommenen Clip und den fünften aufgenommenen Clip zu verarbeiten, um die neu aufgenommene Audiodatei zu erhalten,
wobei die zweite Zeit früher als die erste Zeit und die erste Zeit früher als die dritte Zeit ist.

5. Gerät nach Anspruch 4, wobei das Verarbeitungsmodul ferner dazu konfiguriert ist,
eine Schallwellenform, die dem vierten aufgenommenen Clip entspricht, mit einer Schallwellenform, die dem fünften aufgenommenen Clip entspricht, zu vergleichen,
eine erste Ziel-Schallwellenform aus der dem vierten aufgenommenen Clip entsprechenden Schallwellenform zu erlangen und eine zweite Ziel-Schallwellenform aus der dem fünften aufgenommenen Clip entsprechenden Schallwellenform zu erlangen, wobei die erste Ziel-Schallwellenform und die zweite Ziel-Schallwellenform eine gleiche Startzeit und eine gleiche Endzeit haben, und
die erste Ziel-Schallwellenform und die zweite Ziel-Schallwellenform anzupassen, so dass der vierte aufgenommene Clip und der fünfte aufgenommene Clip zusammengefügt werden, um die neu aufgenommene Audiodatei zu erhalten.

6. Gerät nach Anspruch 4, ferner umfassend:
ein zweites Abspielmodul, das dazu konfiguriert ist, eine entsprechende Begleitdatei während des Abspielvorgangs aufgenommener Clips und der Aufnahme der aufgenommenen Clips abzuspielen.

7. Nichtflüchtiges Speichermedium (120) mit darauf gespeicherten Programmbefehlen, wobei, wenn die Programmbefehle von einer Rechenvorrichtung (1000) ausgeführt werden, die Rechenvorrichtung (1000) dazu konfiguriert wird, die Schritte eines Verfahrens nach einem der Ansprüche 1 bis 3 auszuführen.

## Revendications

1. Procédé de réenregistrement de fichier audio, comprenant les étapes ci-dessous consistant à :
déterminer (101 ; 201) un premier instant, le premier instant étant un premier instant de début d'un clip enregistré à réenregistrer dans un fichier audio ;
lire (102 ; 202) un premier clip enregistré qui a été enregistré, le premier clip enregistré prenant le premier instant comme un premier instant de fin dans le fichier audio, et collecter des secondes données vocales de l'utilisateur pendant le processus de lecture du premier clip enregistré qui a été enregistré, en vue d'obtenir un troisième clip enregistré ;
collecter (103), lorsque le premier instant a été atteint, des premières données vocales de l'utilisateur, en vue d'obtenir un deuxième clip enregistré, et prendre (204) le deuxième clip enregistré et le troisième clip enregistré comme étant des clips enregistrés qui ont été enregistrés audit instant ; et
traiter (104 ; 205) le premier clip enregistré et le deuxième clip enregistré en vue d'obtenir un fichier audio réenregistré, dans lequel ledit traitement comprend les étapes ci-dessous consistant à :
acquérir (2051) une première forme d'onde sonore correspondant au premier clip enregistré, et acquérir une seconde forme d'onde sonore correspondant au deuxième clip enregistré ;
déterminer (2052), à partir de la première forme d'onde sonore, un point de début stable et un deuxième instant correspondant au point de début stable dans le fichier audio ;
déterminer (2053), à partir de la seconde forme d'onde sonore, un point de début ascendant et un troisième instant correspondant au point de début ascendant dans le fichier audio ;
prendre (2054) le deuxième instant en tant qu'un deuxième instant de début pour sélectionner un quatrième clip enregistré parmi les clips enregistrés qui ont été enregistrés audit instant ;
prendre (2055) le troisième instant en tant qu'un deuxième instant de fin pour sélectionner un cinquième clip enregistré parmi les clips enregistrés qui ont été enregistrés au dernier instant, et dans lequel les clips enregistrés qui ont été enregistrés au dernier instant sont constitués du clip enregistré à réenregistrer et du premier clip enregistré ; et
traiter (2056) le quatrième clip enregistré et le cinquième clip enregistré pour obtenir le fichier audio réenregistré ;
dans lequel le deuxième instant est antérieur au premier instant, et le premier instant est antérieur au troisième instant.

2. Procédé selon la revendication 1, dans lequel l'étape consistant à traiter le quatrième clip enregistré et le cinquième clip enregistré en vue d'obtenir le fichier audio réenregistré comprend les étapes ci-dessous consistant à :
comparer une forme d'onde sonore correspondant au quatrième clip enregistré à une forme d'onde sonore correspondant au cinquième clip enregistré ;
acquérir une première forme d'onde sonore cible à partir de la forme d'onde sonore correspondant au quatrième clip enregistré, et acquérir une seconde forme d'onde sonore cible à partir de la forme d'onde sonore correspondant au cinquième clip enregistré, et dans lequel la première forme d'onde sonore cible et la seconde forme d'onde sonore cible présentent un même instant de début et un même instant de fin ; et
ajuster la première forme d'onde sonore cible et la seconde forme d'onde sonore cible, de sorte que le quatrième clip enregistré et le cinquième clip enregistré sont assemblés pour obtenir le fichier audio réenregistré.

3. Procédé selon la revendication 1, comprenant en outre l'étape ci-dessous consistant à :
lire un fichier d'accompagnement correspondant dans le processus de lecture de clips enregistrés qui ont été enregistrés et enregistrer les clips enregistrés.

4. Dispositif de réenregistrement de fichier audio, comprenant :
un ou plusieurs processeurs ; et
une mémoire sur laquelle sont stockés des modules de programme, dans lequel les modules de programme comprennent :
un module d'acquisition (901), configuré de manière à déterminer un premier instant, le premier instant étant un premier instant de début d'un clip enregistré devant être réenregistré dans un fichier audio ;
un premier module de lecture (902), configuré de manière à lire un premier clip enregistré qui a été enregistré, le premier clip enregistré prenant le premier instant en tant qu'un premier instant de fin dans le fichier audio ;
un premier module de collecte (903), configuré de manière à collecter, lorsque le premier instant a été atteint, des premières données vocales d'un utilisateur en vue d'obtenir un deuxième clip enregistré ;
un second module de collecte, configuré de manière à collecter des secondes données vocales de l'utilisateur au cours d'un processus de lecture du premier clip vidéo qui a été enregistré afin d'obtenir un troisième clip enregistré, et prendre le deuxième clip enregistré et le troisième clip enregistré en tant que des clips enregistrés qui ont été enregistrés audit instant ; et
un module de traitement (904), configuré de manière à traiter le premier clip enregistré et le deuxième clip enregistré en vue d'obtenir un fichier audio réenregistré, ledit module de traitement étant configuré de manière à :
acquérir une première forme d'onde sonore correspondant au premier clip enregistré, et acquérir une seconde forme d'onde sonore correspondant au deuxième clip enregistré ;
déterminer, à partir de la première forme d'onde sonore, un point de début stable et un deuxième instant correspondant au point de début stable dans le fichier audio ;
déterminer, à partir de la seconde forme d'onde sonore, un point de début ascendant et un troisième instant correspondant au point de début ascendant dans le fichier audio ;
prendre le deuxième instant en tant qu'un deuxième instant de début pour sélectionner un quatrième clip enregistré parmi les clips enregistrés qui ont été enregistrés audit instant ;
prendre le troisième instant en tant qu'un deuxième instant de fin pour sélectionner un cinquième clip enregistré parmi les clips enregistrés qui ont été enregistrés au dernier instant, et dans lequel les clips enregistrés qui ont été enregistrés au dernier instant sont constitués du clip enregistré à réenregistrer et du premier clip enregistré ; et
traiter le quatrième clip enregistré et le cinquième clip enregistré pour obtenir le fichier audio réenregistré ;
dans lequel le deuxième instant est antérieur au premier instant, et le premier instant est antérieur au troisième instant.

5. Dispositif selon la revendication 4, dans lequel le module de traitement est en outre configuré de manière à :
comparer une forme d'onde sonore correspondant au quatrième clip enregistré à une forme d'onde sonore correspondant au cinquième clip enregistré ;
acquérir une première forme d'onde sonore cible à partir de la forme d'onde sonore correspondant au quatrième clip enregistré, et acquérir une seconde forme d'onde sonore cible à partir de la forme d'onde sonore correspondant au cinquième clip enregistré, et dans lequel la première forme d'onde sonore cible et la seconde forme d'onde sonore cible présentent un même instant de début et un même instant de fin ; et
ajuster la première forme d'onde sonore cible et la seconde forme d'onde sonore cible, de sorte que le quatrième clip enregistré et le cinquième clip enregistré sont assemblés pour obtenir le fichier audio réenregistré.

6. Dispositif selon la revendication 4, comprenant en outre :
un second module de lecture, configuré de manière à lire un fichier d'accompagnement correspondant pendant le processus de lecture de clips enregistrés qui ont été enregistrés, et d'enregistrement des clips enregistrés.

7. Support de stockage non volatil (120) sur lequel sont stockées des instructions de programme, dans lequel, lorsque les instructions de programme sont exécutées par un appareil informatique (1000), l'appareil informatique (1000) est configuré de manière à exécuter les étapes d'un procédé selon l'une quelconque des revendications 1 à 3.
